# EUROPEAN PATENT APPLICATION

(11) **EP 4 768 164 A1**
(43) Date of publication of application: **01.07.2026**
(21) Application number: 25216836.4
(22) Date of filing: 19.11.2025
(51) Int. Cl.: B23K 11/11, B23K 11/30

(54) **ELECTRODE FOR SOLID-PHASE RESISTANCE SPOT JOINING AND SOLID-PHASE RESISTANCE SPOT JOINING APPARATUS**

(30) Priority: 24.12.2024 JP 2024227274
(71) Applicant: DAIHEN Corporation, Yodogawa-ku Osaka-shi Osaka 532-8512 (JP)
(72) Inventor: Takei, Yuko, Osaka-shi, Osaka 532-8512 (JP)
(74) Representative: Hoffmann Eitle

(57) **Abstract**

An electrode (10) for solid-phase resistance spot joining includes a cylindrical portion (11) that extends in an axial direction, the cylindrical portion (11) being provided with one end (12) in the axial direction. The one end (12) includes a tip end surface (14) to be pressed against a workpiece (301, 302). By providing a plurality of slits (50) by cutting in the axial direction, the one end (12) is divided into a plurality of pieces aligned at an interval in a circumferential direction of the cylindrical portion (11) when viewed from a side of the tip end surface (14).

## Description

### CROSS REFERENCE TO RELATED APPLICATIONS

This nonprovisional application is based on Japanese Patent Application No. 2024-227274 filed with the Japan Patent Office on December 24, 2024, the entire contents of which are hereby incorporated by reference.

### BACKGROUND OF THE INVENTION

### Field of the Invention

The present invention relates to an electrode for solid-phase resistance spot joining and a solid-phase resistance spot joining apparatus including the same.

### Description of the Background Art

For example, Japanese Patent Laying-Open No. 2010-131666 discloses an electrode for spot welding. This electrode for spot welding is structured such that a cylindrical hollow portion that does not abut on a workpiece is provided at a central portion in the vicinity of a tip end of the electrode and only a peripheral portion around the cylindrical hollow portion abuts on the workpiece. A part of the electrode for spot welding that abuts on the workpiece (that is, the tip end of the peripheral portion around the cylindrical hollow portion) is formed flat.

### SUMMARY OF THE INVENTION

In the electrode as described in the document, the part to be in contact with the workpiece is formed flat. Therefore, when contact between the electrode and the workpiece becomes nonuniform due to curving or the like of the workpiece, quality of joint disadvantageously lowers.

Therefore, the present invention was made to solve the problem described above, and an object thereof is to provide an electrode for solid-phase resistance spot joining and a solid-phase resistance spot joining apparatus that can achieve suppression of lowering in quality of joint.

An electrode for solid-phase resistance spot joining based on the present invention includes a cylindrical portion that extends in an axial direction, the cylindrical portion being provided with one end in the axial direction. The one end includes a tip end surface to be pressed against a workpiece. By providing a plurality of slits by cutting in the axial direction, the one end is divided into a plurality of pieces aligned at an interval in a circumferential direction of the cylindrical portion when viewed from a side of the tip end surface.

According to such a configuration, the electrode for solid-phase resistance spot joining capable of achieving suppression of lowering in quality of joint can be provided.

In the electrode for solid-phase resistance spot joining based on the present invention, the cylindrical portion may include a base portion provided adjacently to the one end in the axial direction. The plurality of slits may be provided by cutting in the axial direction to pass through the one end and to reach a part of the base portion. The one end may increase in diameter like a flange with respect to the base portion.

According to such a configuration, elastic deformation of the pieces at a portion of the base portion configured to be lower in rigidity than the one end is promoted, and consequently, nonuniform contact between the tip end surface and the workpiece is drastically suppressed.

In the electrode for solid-phase resistance spot joining based on the present invention, the one end and the base portion may be formed as being integrated.

According to such a configuration, lowering in quality of joint can be suppressed without providing another member in the electrode for solid-phase resistance spot joining, and cost is reduced and ease in maintenance is improved.

In the electrode for solid-phase resistance spot joining based on the present invention, the tip end surface may have an outer edge portion inclined toward an outer edge of the tip end surface to come closer to the base portion in the axial direction.

According to such a configuration, the tip end surface can be more likely to conform to a surface of the workpiece.

A solid-phase resistance spot joining apparatus based on the present invention includes the electrode for solid-phase resistance spot joining based on the present invention and a pressurization shaft capable of pressurizing the workpiece. The pressurization shaft is provided inside the electrode for solid-phase resistance spot joining.

According to such a configuration, the solid-phase resistance spot joining apparatus capable of achieving suppression of lowering in quality of joint can be provided.

The foregoing and other objects, features, aspects, and advantages of this invention will become more apparent from the following detailed description of this invention when taken in conjunction with the accompanying drawings.

### BRIEF DESCRIPTION OF THE DRAWINGS

Fig. 1 is a schematic cross-sectional view generally showing a solid-phase resistance spot joining apparatus according to an embodiment.
Fig. 2 is a perspective view of an electrode for solid-phase resistance spot joining according to the embodiment.
Fig. 3 is a side view of the electrode for solid-phase resistance spot joining shown in Fig. 2.
Fig. 4 is a bottom view of the electrode for solid-phase resistance spot joining shown in Fig. 2.
Fig. 5 is a plan view of the electrode for solid-phase resistance spot joining shown in Fig. 2.
Figs. 6 and 7 are each a cross-sectional view schematically showing a manner of solid-phase resistance spot joining with the use of the electrode for solid-phase resistance spot joining shown in Fig. 2.

### DESCRIPTION OF THE PREFERRED EMBODIMENTS

An embodiment of the present invention will be described in detail below with reference to the drawings. In the embodiment shown below, the same or common elements have the same reference characters allotted in the drawings and description thereof will not be repeated.

### (Embodiment)

### <A. General Configuration of Solid-Phase Resistance Spot Joining Apparatus>

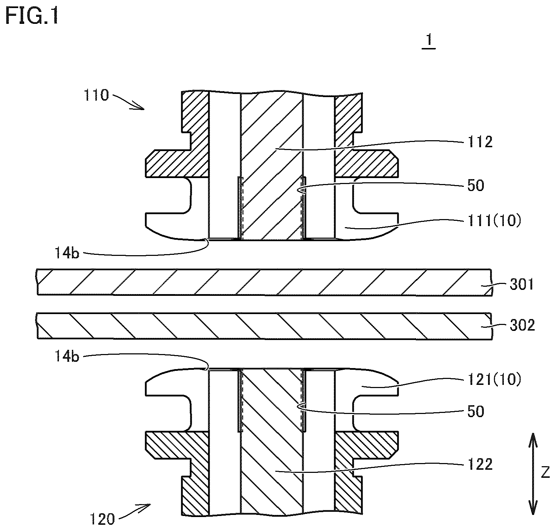

Fig. 1 is a schematic cross-sectional view generally showing a solid-phase resistance spot joining apparatus according to an embodiment. A general configuration of a solid-phase resistance spot joining apparatus 1 equipped with an electrode 10 for solid-phase resistance spot joining according to the present embodiment will be described below with reference to Fig. 1.

Solid-phase resistance spot joining apparatus 1 is an apparatus used for what is called solid-phase resistance spot joining in which a plurality of workpieces are joined in a solid-phase state in a low-temperature region without being molten. Specifically, while solid-phase resistance spot joining apparatus 1 forms softened regions in the plurality of overlaid workpieces by applying a voltage thereto, it plastically deforms the softened regions by applying a load to the plurality of workpieces where the softened regions have been formed.

In the present embodiment, workpieces 301 and 302 in a form of a plate are joined to each other by solid-phase resistance spot joining apparatus 1. The number of workpieces is not particularly limited to two, and may be set to three or more. In the present embodiment, a direction orthogonal to an in-plane direction of workpieces 301 and 302 is also referred to as a Z-axis direction.

Workpiece 301, 302 is formed from a steel plate such as a high tensile strength steel plate. Workpiece 301, 302 is not particularly limited to an object formed from the steel plate and may be formed from an aluminum plate or the like. Workpiece 301, 302 may be formed from materials different from each other in type such as a steel plate and an aluminum plate.

As shown in Fig. 1, solid-phase resistance spot joining apparatus 1 includes a first joining unit 110 and a second joining unit 120. First joining unit 110 and second joining unit 120 are configured to press a plurality of overlaid workpieces as sandwiching the workpieces therebetween.

First joining unit 110 includes a first electrode 111 and a first pressurization shaft 112. First joining unit 110 is driven in the Z-axis direction by a drive apparatus such as a servo press (not shown). First joining unit 110 is supplied with electric power from a not-shown power supply (not shown).

First electrode 111 is substantially in a cylindrical shape. First electrode 111 is arranged around first pressurization shaft 112 as being located at a distance from first pressurization shaft 112 in a radial direction. First electrode 111 is configured to apply a voltage to workpieces 301 and 302. A detailed configuration of first electrode 111 will be described in detail later.

First pressurization shaft 112 includes a portion substantially in a columnar shape. First pressurization shaft 112 is configured to plastically deform overlaid workpieces 301 and 302 by pressurizing them along the Z-axis direction. First pressurization shaft 112 is provided inside first electrode 111.

Second joining unit 120 includes a second electrode 121 and a second pressurization shaft 122. Second joining unit 120 is supplied with electric power from a not-shown power supply (not shown).

Second electrode 121 is substantially in a cylindrical shape. Second electrode 121 is arranged around second pressurization shaft 122 as being located at a distance from second pressurization shaft 122 in the radial direction. Second electrode 121 is configured to apply a voltage to workpieces 301 and 302. A detailed configuration of second electrode 121 will be described in detail later.

Second pressurization shaft 122 includes a portion substantially in a columnar shape. Second pressurization shaft 122 is configured to plastically deform overlaid workpieces 301 and 302 by pressurizing them along the Z-axis direction. Second pressurization shaft 122 is provided inside second electrode 121.

A material for first electrode 111 and second electrode 121 is, for example, copper. A material for first pressurization shaft 112 and second pressurization shaft 122 is, for example, tungsten carbide. The material for first pressurization shaft 112 and second pressurization shaft 122 is not particularly limited to tungsten carbide so long as workpieces 301 and 302 can be pressed in a plastically deformable manner, and tool steel, heat-resisting steel, ceramic, or the like may be adopted.

First electrode 111 and second electrode 121 are identical to each other in configuration, and each of them corresponds to the electrode for solid-phase resistance spot joining in the present embodiment. Therefore, when first electrode 111 and second electrode 121 are not distinguished from each other, they are collectively referred to as electrode 10 for solid-phase resistance spot joining below.

In the present embodiment, each of first pressurization shaft 112 and second pressurization shaft 122 corresponds to the pressurization shaft.

By being attached to a gun arm (not shown) or the like, first joining unit 110 and second joining unit 120 are coaxially located as being opposed to each other in the Z-axis direction.

First joining unit 110 is driven in the Z-axis direction by the drive apparatus as described above. First joining unit 110 is thus configured as being movable relatively to second joining unit 120 along the Z-axis direction.

### <B. Detailed Configuration of Electrode for Solid-Phase Resistance Spot Joining>

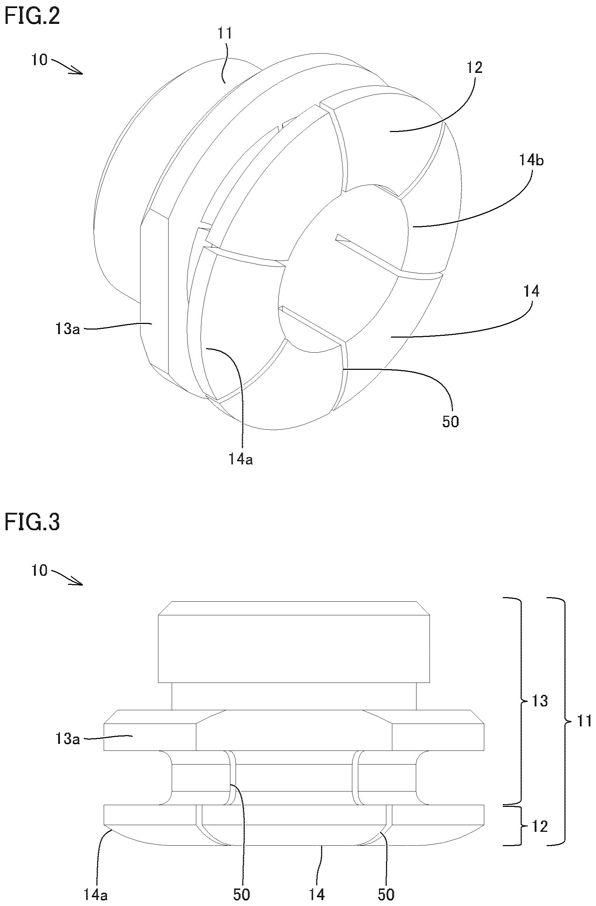

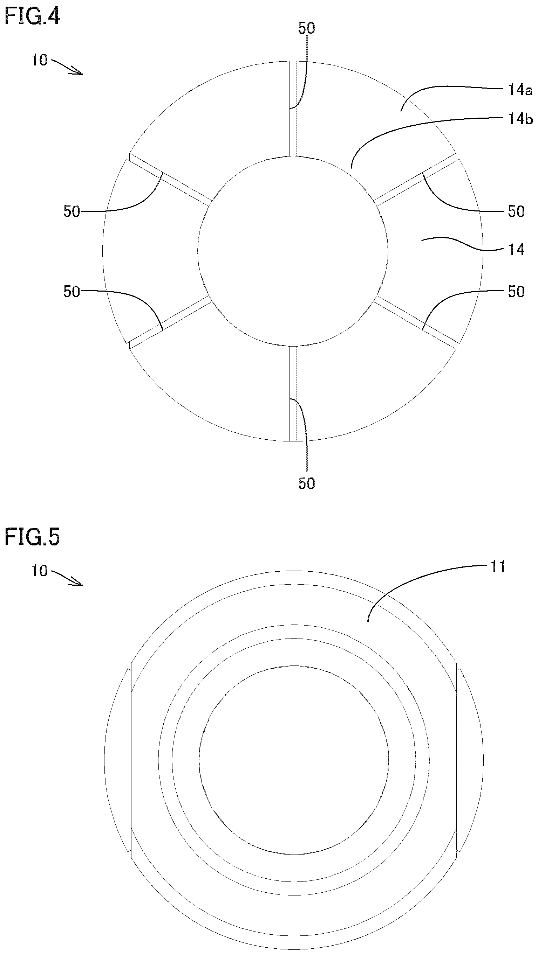

Fig. 2 is a perspective view of the electrode for solid-phase resistance spot joining according to the embodiment. Fig. 3 is a side view of the electrode for solid-phase resistance spot joining shown in Fig. 2. Fig. 4 is a bottom view of the electrode for solid-phase resistance spot joining shown in Fig. 2. Fig. 5 is a plan view of the electrode for solid-phase resistance spot joining shown in Fig. 2. The detailed configuration of electrode 10 for solid-phase resistance spot joining according to the present embodiment will be described below with reference to Figs. 2 to 5 and Fig. 1 described previously.

As shown in Figs. 1 to 5, electrode 10 for solid-phase resistance spot joining includes a cylindrical portion 11 that extends in an axial direction. While electrode 10 for solid-phase resistance spot joining is assembled to solid-phase resistance spot joining apparatus 1, the axial direction coincides with the Z-axis direction.

Cylindrical portion 11 includes one end 12 in the axial direction and a base portion 13 provided adjacently to one end 12 in the axial direction. Cylindrical portion 11 is formed as being integrated in its entirety including one end 12 and base portion 13.

One end 12 increases in diameter like a flange with respect to base portion 13. Specifically, one end 12 increases in diameter like the flange with respect to an end of base portion 13 on a side of one end 12. Therefore, at least the end of base portion 13 on the side of one end 12 is lower in rigidity than one end 12 like the flange.

One end 12 includes a tip end surface 14 to be pressed against the workpiece in solid-phase resistance spot joining. When viewed along the axial direction, tip end surface 14 is substantially in an annular shape (see Fig. 4).

Tip end surface 14 has an outer edge portion 14a inclined toward an outer edge of tip end surface 14 to come closer to base portion 13 in the axial direction. Tip end surface 14 has an inner edge portion 14b inclined toward an inner edge of tip end surface 14 to come closer to base portion 13 in the axial direction.

An end of base portion 13 opposite to one end 12 is connected to a holder (not shown) configured to hold electrode 10 for solid-phase resistance spot joining. Specifically, a male screw (not shown) is provided at the end of base portion 13. As this male screw is screwed to a female screw of the holder, electrode 10 for solid-phase resistance spot joining is held by the holder.

Base portion 13 includes a flange portion 13a at an intermediate portion in the axial direction. While the holder is connected to electrode 10 for solid-phase resistance spot joining, an end surface of the holder abuts on flange portion 13a. Electric power from a power supply is supplied through the holder to electrode 10 for solid-phase resistance spot joining. A main surface of flange portion 13a located opposite to one end 12 functions as a power feed surface of electrode 10 for solid-phase resistance spot joining.

A plurality of slits 50 are provided in one end 12 by cutting in the axial direction. Thus, when viewed from a side of tip end surface 14, one end 12 is divided into a plurality of pieces aligned at an interval in a circumferential direction of cylindrical portion 11 (see Fig. 4). The plurality of slits 50 are provided by cutting in the axial direction to pass through one end 12 and to reach a part of base portion 13. Specifically, the plurality of slits 50 are provided by cutting to extend from one end 12 to a portion of base portion 13 closer to one end 12 relative to flange portion 13a.

In the present embodiment, six slits 50 are radially provided when viewed from the side of tip end surface 14. The number of slits 50 is not particularly limited to six, and at least two slits should only be provided.

### <C. Solid-Phase Resistance Spot Joining>

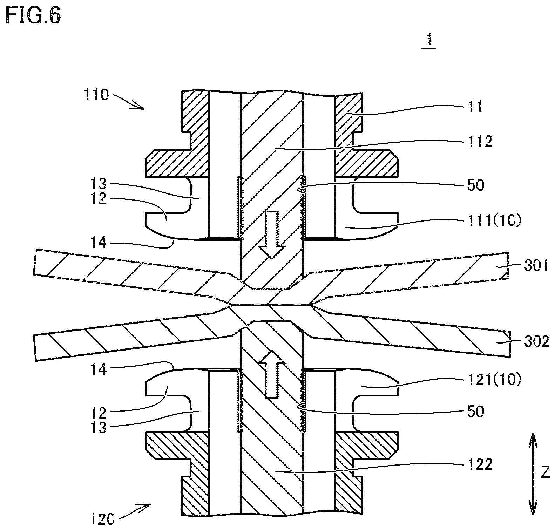

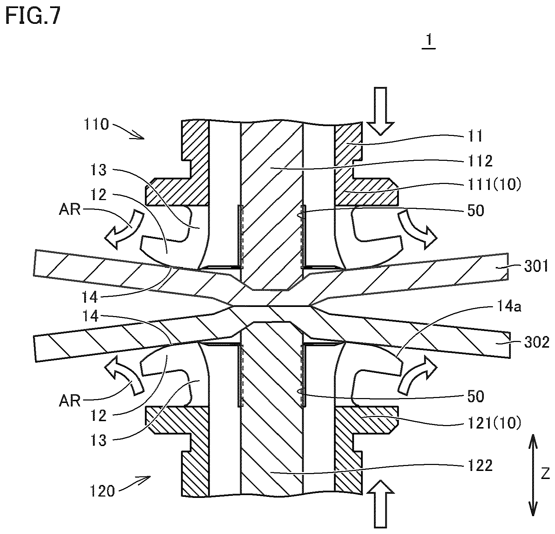

Figs. 6 and 7 are each a cross-sectional view schematically showing a manner of solid-phase resistance spot joining with the use of the electrode for solid-phase resistance spot joining shown in Fig. 2. The manner of solid-phase resistance spot joining with the use of electrode 10 for solid-phase resistance spot joining will be described below with reference to Figs. 6 and 7.

As shown in Fig. 6, in joining workpieces 301 and 302 to each other with solid-phase resistance spot joining apparatus 1, initially, workpieces 301 and 302 are sandwiched in the Z-axis direction between first pressurization shaft 112 and second pressurization shaft 122 and pressed from opposing sides. Force to press workpieces 301 and 302 by first pressurization shaft 112 and second pressurization shaft 122 is set, for example, to 30 kN to 70 kN.

Then, as shown in Fig. 7, by pressing first electrode 111 and second electrode 121 against workpieces 301 and 302 while pressing force is applied to workpieces 301 and 302, a voltage is applied to workpieces 301 and 302. Workpieces 301 and 302 are thus heated so that softened regions are formed in workpieces 301 and 302 and workpieces 301 and 302 are joined to each other in the softened regions. A current fed to workpieces 301 and 302 is set, for example, to 3.5 kA to 10 kA.

The surface of the workpiece against which electrode 10 for solid-phase resistance spot joining is thus pressed may not be flat, because the surface of the workpiece is originally not formed flat or the surface of the workpiece that has originally been flat may be deformed by the pressurization shaft.

In this regard, electrode 10 for solid-phase resistance spot joining according to the present embodiment has one end 12 including tip end surface 14 divided into the plurality of pieces by providing by cutting, the plurality of slits 50 at one end 12 as described above.

According to such a configuration, even in an example where the surface of the workpiece is not flat, each of pieces of one end 12 elastically deforms to spread radially outward as conforming to the surface of the workpiece when tip end surface 14 is pressed against the workpiece (see an arrow AR in Fig. 7). A gap between tip end surface 14 of each piece and the surface of the workpiece is thus buried, and consequently, lowering in quality of joint due to nonuniform contact between tip end surface 14 and the workpiece is effectively suppressed.

Therefore, with the configuration like electrode 10 for solid-phase resistance spot joining according to the present embodiment, lowering in quality of joint can be suppressed.

In the present embodiment, as described above, one end 12 increases in diameter like the flange with respect to base portion 13 and the plurality of slits 50 are provided by cutting to pass through one end 12 and to reach a part of base portion 13.

According to such a configuration, above-described elastic deformation of the pieces at the portion of base portion 13 configured to be lower in rigidity than one end 12 is promoted, and consequently, nonuniform contact between tip end surface 14 and the workpiece is drastically suppressed.

Furthermore, in the present embodiment, as described above, tip end surface 14 has outer edge portion 14a inclined toward the outer edge of tip end surface 14 to come closer to base portion 13 in the axial direction. According to such a configuration, tip end surface 14 can be more likely to conform to the surface of the workpiece.

In the present embodiment, as described above, tip end surface 14 has inner edge portion 14b inclined toward the inner edge of tip end surface 14 to come closer to base portion 13 in the axial direction.

According to such a configuration, when tip end surface 14 is pressed against the workpiece, repulsive force from the workpiece is applied to inner edge portion 14b radially outward. This repulsive force promotes above-described elastic deformation of the pieces, and consequently, nonuniform contact between tip end surface 14 and the workpiece is further suppressed.

An example in which base portion 13 includes flange portion 13a is exemplified in the present embodiment. For example, however, when relation of screwing between the male screw of base portion 13 and the female screw of the holder is reversed (in other words, the female screw is provided in base portion 13 and the male screw is provided in the holder) and a power feed path to electrode 10 for solid-phase resistance spot joining is adjusted as appropriate, base portion 13 does not necessarily have to include flange portion 13a.

### (Additional Aspects)

Characteristic features of the electrode for solid-phase resistance spot joining and the solid-phase resistance spot joining apparatus including the same disclosed in the embodiment described above are summarized as below.

### [Additional Aspect 1]

An electrode for solid-phase resistance spot joining includes
a cylindrical portion that extends in an axial direction, the cylindrical portion being provided with one end in the axial direction,
the one end includes a tip end surface to be pressed against a workpiece, and
by providing a plurality of slits by cutting in the axial direction, the one end is divided into a plurality of pieces aligned at an interval in a circumferential direction of the cylindrical portion when viewed from a side of the tip end surface.

### [Additional Aspect 2]

In the electrode for solid-phase resistance spot joining described in Additional Aspect 1,
the cylindrical portion includes a base portion provided adjacently to the one end in the axial direction,
the plurality of slits are provided by cutting in the axial direction to pass through the one end and to reach a part of the base portion, and
the one end increases in diameter like a flange with respect to the base portion.

### [Additional Aspect 3]

In the electrode for solid-phase resistance spot joining described in Additional Aspect 2,
the one end and the base portion are formed as being integrated.

### [Additional Aspect 4]

In the electrode for solid-phase resistance spot joining described in Additional Aspect 2 or 3,
the tip end surface has an outer edge portion inclined toward an outer edge of the tip end surface to come closer to the base portion in the axial direction.

### [Additional Aspect 5]

A solid-phase resistance spot joining apparatus includes
the electrode for solid-phase resistance spot joining described in any one of Additional Aspects 1 to 4, and
a pressurization shaft capable of pressurizing the workpiece, and
the pressurization shaft is provided inside the electrode for solid-phase resistance spot joining.

### (Other Forms etc.)

A shape, a configuration, a size, the number, a material, or the like of portions shown in the embodiment described above can variously be modified without departing from the gist of the present invention.

Furthermore, characteristic features shown in the embodiment described above can naturally be combined within the scope not departing from the gist of the present invention.

Though an embodiment of the present invention has been described, it should be understood that the embodiment disclosed herein is illustrative and non-restrictive in every respect. The scope of the present invention is defined by the terms of the claims and is intended to include any modifications within the scope and meaning equivalent to the terms of the claims.

## Claims

1. An electrode for solid-phase resistance spot joining comprising:
a cylindrical portion (11) that extends in an axial direction, the cylindrical portion (11) being provided with one end (12) in the axial direction, wherein
the one end (12) includes a tip end surface (14) to be pressed against a workpiece (301, 302), and
by providing a plurality of slits (50) by cutting in the axial direction, the one end (12) is divided into a plurality of pieces aligned at an interval in a circumferential direction of the cylindrical portion (11) when viewed from a side of the tip end surface (14).

2. The electrode for solid-phase resistance spot joining according to claim 1,
wherein
the cylindrical portion (11) includes a base portion (13) provided adjacently to the one end (12) in the axial direction,
the plurality of slits (50) are provided by cutting in the axial direction to pass through the one end (12) and to reach a part of the base portion (13), and
the one end (12) increases in diameter like a flange with respect to the base portion (13).

3. The electrode for solid-phase resistance spot joining according to claim 2,
wherein
the one end (12) and the base portion (13) are formed as being integrated.

4. The electrode for solid-phase resistance spot joining according to claim 2 or 3, wherein
the tip end surface (14) has an outer edge portion (14a) inclined toward an outer edge of the tip end surface (14) to come closer to the base portion (13) in the axial direction.

5. A solid-phase resistance spot joining apparatus comprising:
the electrode (10) for solid-phase resistance spot joining according to any one of claims 1 to 4; and
a pressurization shaft (112, 122) capable of pressurizing the workpiece (301, 302), wherein
the pressurization shaft (112, 122) is provided inside the electrode (10) for solid-phase resistance spot joining.
